# EUROPÄISCHE PATENTSCHRIFT

(11) **EP 2 039 828 B1**
(45) Veröffentlichungstag und Bekanntmachung des Hinweises auf die Patenterteilung: **10.11.2010**
(21) Anmeldenummer: 08008652.3
(22) Anmeldetag: 08.05.2008
(51) Int. Cl.: D21C 9/18, D21B 1/32, D21D 5/00

(54) **Verfahren zur Behandlung einer Papierfasersuspension**
Method for treating a paper fibre suspension
Procédé de traitement d'une suspension de fibre de papier

(30) Priorität: 20.09.2007 DE 102007044952
(43) Veröffentlichungstag der Anmeldung: 25.03.2009
(73) Patentinhaber: Voith Patent GmbH, 89522 Heidenheim (DE)
(72) Erfinder: Kemper, Martin, 88250 Weingarten (DE)

(56) Entgegenhaltungen:
- EP-A- 0 538 603
- EP-A- 1 728 918
- WO-A-2005/024125
- WO-A-2008/067916
- US-A- 4 780 179
- US-A- 4 806 203
- US-A1- 2005 061 459

## Beschreibung

Die Erfindung bezieht sich auf ein Verfahren gemäß dem Oberbegriff des Anspruchs 1.

Bekanntlich enthalten Papierfasersuspensionen nicht nur die eigentlichen Papierfasern, sondern auch eine mehr oder weniger große Menge von feinen Feststoffen. Solche feinen Feststoffe können mineralische Füllstoffe sein, die in der Regel zur Papiererzeugung nötig sind. Man nennt sie zumeist "Asche", da die mineralischen Füllstoffe unbrennbar sind. Es können aber auch Faserbruchstücke sein, die z.B. bei der Mahlung der Fasern entstehen. Diese werden auch Feinstoffe genannt.

Wenn aus prozesstechnischen Gründen die Konsistenz der Papierfasersuspension erhöht werden soll, wird sie eingedickt. Dabei gehen nicht nur ein Teil des Wassers, sondern auch ein Teil der feinen Feststoffe in das Filtrat über, weshalb also in der Regel sich das Filtrat aus Wasser, Fein- und Füllstoffen zusammensetzt. Bei der üblichen Prozessführung wird dieses Filtrat dort verwendet, wo an einer stromaufwärts gelegenen Stelle aus prozesstechnischen Gründen die Faserstoffsuspension verdünnt werden muss. Auf diese Weise gehen die feinen Feststoffe zwar nicht verloren, es ist jedoch möglich, dass die Anreicherung von Fein- und Füllstoffen in den Filtraten relativ groß wird. Daher kann diese an sich günstige Methode der Filtratrückführung zu Störungen im Prozessablauf führen. Eine mögliche Abhilfe, um solche Störungen zu vermeiden, liegt darin, die Fein- und Füllstoffe aus dem Kreislauf zu entfernen. So ist es z.B. möglich, eine vorhandene Flotationsanlage so einzustellen, dass sie den Stoff wesentlich stärker entascht als es für das aus der Faser später hergestellte Papier an sich erforderlich ist. Dann steigen aber die Stoffverluste an, die Ausbeute sinkt.

Der Erfindung liegt die Aufgabe zu Grunde, Verfahren dieser Art so zu verbessern, dass sich der Aufbereitungsprozess insbesondere auch bei hohem Anteil von feinen Feststoffen sicher und mit geringen Stoffverlusten durchführen lässt.

Diese Aufgabe wird durch die im Kennzeichen des Anspruchs 1 genannten Merkmale in Verbindung mit denen des Oberbegriffs gelöst.

Bei Anwendung des erfindungsgemäßen Verfahrens ergibt sich die Möglichkeit, die bei den Eindickungsschritten anfallenden Filtrate so zu führen, bzw. zu behandeln, dass die darin enthaltenen feinen Feststoffe optimal genutzt werden können. Dabei wird das an sich bekannte Prinzip der Filtratrückwärtsführung noch verbessert. Besondere Vorteile ergeben sich dann, wenn der Rohstoff und damit die Faserstoffsuspension besonders viel Asche enthält, was z.B. bei vielen Altpapiersorten der Fall ist. Dabei sind rohstoffseitig bereits Aschegehalte von 20 % oder darüber keine Seltenheit. Bei diesem Verfahren wird also nacheinander mehrmals eingedickt, um die Konsistenz zu erhöhen, wozu in der Regel verschiedene nacheinander geschaltete Apparate verwendet werden. Für die erste Eindickung ist ein Filter, insbesondere ein Scheibenfilter optimal, da zu Beginn der Eindickung eine relativ geringe Konsistenz (ca. 1 bis 3 %) vorliegt. Auch eine Siebpresse oder Siebbandpresse kann als Filter verwendet werden. In vielen Fällen wird die dem Filter direkt folgende Eindickung mit besonders ökonomisch arbeitenden Schneckenpressen durchgeführt. Solche Schneckenpressen haben sich bewährt, im Gegensatz zu Filtern oder Siebbandpressen ist bei ihnen der Siebdurchfall jedoch deutlich größer, was gerade bei aschereichen Faserstoffsuspensionen zu einem relativ großen Aschegehalt auch in den gebildeten Filtraten führt. Mit dem neuen Verfahren können die Gesamtverluste der Anlage gering gehalten werden, ohne dass im Aufbereitungsprozess Nachteile entstehen. Bei Zugabe des feststoffreichen Filtrates nach einer Flotationsanlage kann diese mit weniger Feinstoffen gefahren werden. Das verbessert den Flotationseffekt und reduziert die Stoffverluste in der Flotationsanlage. In Folge des erhöhten Volumenstromes muss die Filteranlage eventuell größer ausgelegt werden, was wegen des Nutzens der Erfindung ohne Weiteres in Kauf genommen werden kann.

Die Erfindung und ihre Vorteile werden erläutert an Hand von Zeichnungen, von denen zeigen:
- Fig. 1: ein Verfahrensschema zur Durchführung des erfindungsgemäßen Verfahrens;
- Fig. 2: eine Variante des Verfahrens;
- Fig. 3: eine schematisch dargestellte Anlage zur Durchführung des Verfahrens.

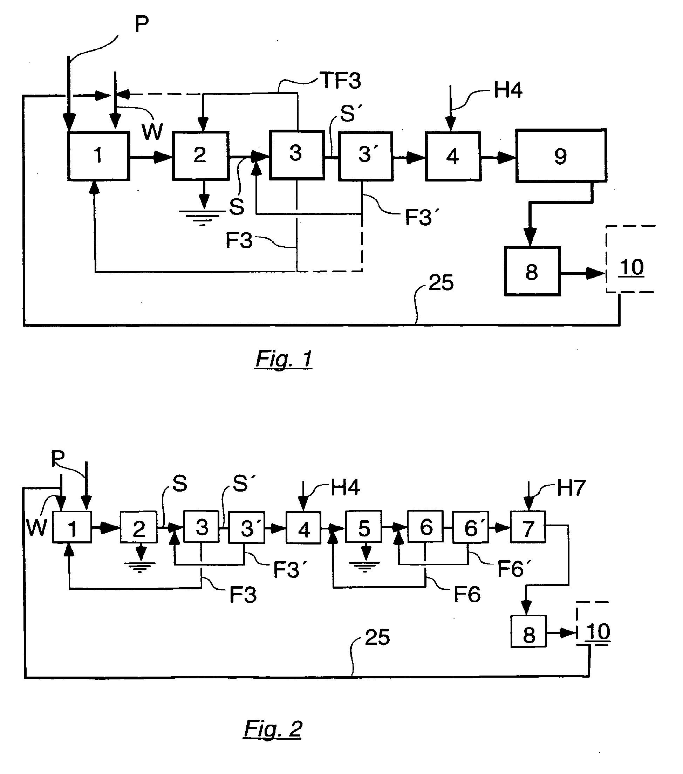

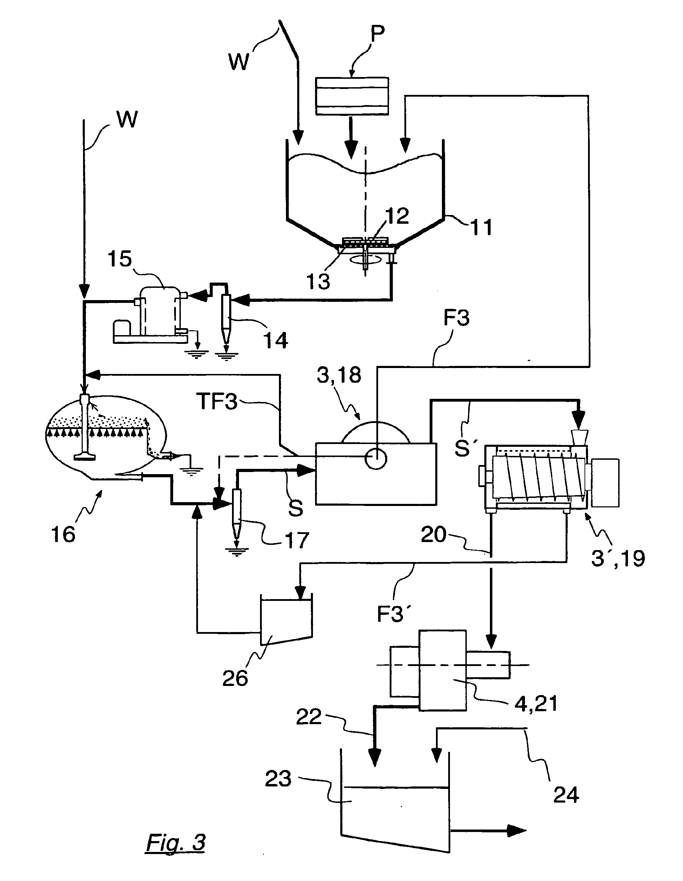

In Fig. 1 ist ein Verfahrensschema dargestellt, welches in einer exemplarischen Kombination die wesentlichen Prozessschritte bei der Durchführung des erfindungsgemäßen Verfahrens zeigt. Wie an sich bekannt, wird eine Faserstoffsuspension dadurch hergestellt, dass das Papiermaterial P z.B. in Form von Altpapier mit Wasser W in einer Auflösung 1 mechanisch und eventuell chemisch so bearbeitet wird, dass eine pumpfähige Faserstoffsuspension entsteht. Die sich anschließende erste Reinigung 2 kann z.B. mit Drucksortierern und Hydrozyklonen (siehe auch Fig. 3) versehen sein, um die groben Verunreinigungen möglichst früh auszuscheiden. Die gereinigte Faserstoffsuspension S gelangt direkt nacheinander in die stromaufwärtige Eindickung 3 und die Eindickung 3'. Die stromaufwärtige Eindickung 3 wird vorzugsweise mit einer Filtervorrichtung, z.B. mit einer Siebpresse oder mit einem Scheibenfilter durchgeführt. In vielen Fällen wird bei einem Scheibenfilter eine geringere Menge Trübfiltrat TF 3 und eine größere Menge Filtrat F3, "Klarfiltrat", getrennt abgeleitet. Das Filtrat F3 wird üblicherweise bei der Auflösung verwendet. Das Trübfiltrat TF3 wird zu Verdünnungszwecken in die Faserstoffsuspension zurückgeführt, vorzugsweise stromaufwärts bezüglich der Eindickung 3, aus der es stammt. Die der Eindickung 3 unmittelbar folgende Eindickung 3' kann vorzugsweise in einer Schneckenpresse erfolgen. In ihr wird ein Filtrat F3' durch einen perforierten Siebmantel hindurchgepresst und vollständig oder zumindest teilweise an eine Stelle in den Faserstoffsuspensionsstrom zurückgeführt, welche stromaufwärts zur Eindickung 3, aber auch stromabwärts zur Flotationsanlage in der Reinigung 2 liegt, wodurch sich der Prozess leicht an die gegebenen Bedingungen und den gewünschten Aschegehalt anpassen lässt. Eventuell kann ein Teil des Filtrats F3' auch in die Auflösung 1 zurückgeführt werden.

Diese Option ist gestrichelt eingezeichnet.

Nach der Eindickung 3 hat der Faserstoff eine wesentlich höhere Konsistenz (z.B. 15 bis 30 %) und gelangt in die Stoffbearbeitung 4, in der ein oder mehrere Prozessschritte durchgeführt werden, die diese höhere Konsistenz erforderlich machen. Das kann z.B. üblicherweise eine Dispergierung mit oder ohne Bleiche sein, wozu die Hilfsmittel H4 in Form von Energie und/oder der Chemikalien zugeführt werden. Nach der Hochkonsistenzbehandlung wird der Stoff wieder verdünnt. Fig. 1 zeigt den ersten Teil der Aufbereitung, dem in der Regel weitere Teile folgen, hier als Weiterbearbeitung 9 dargestellt.

Am Ende wird die fertige Faserstoffsuspension in einer Stoffvorlage 8 für die Verarbeitung auf der Papier- oder Kartonmaschine bereitgestellt. Die Papier- oder Kartonmaschine 10 ist hier nur angedeutet. Ein Teil des dort anfallenden Siebwassers kann als Verdünnungswasser 25 in der Stoffaufbereitung genutzt werden, z.B. um einen Teil des Wassers W für die Auflösung 1 bereit zu stellen oder auch um eine zusätzliche Verdünnung an anderer Stelle vorzunehmen. Um zu verhindern, dass mit Hilfe dieses Verdünnungswassers 25 ein Teil der Aschefracht aus der Papiermaschine in die Stoffaufbereitung zurückgelangt, kann man ein späteres Siebwasser mit geringerem Ascheanteil, also z.B. Siebwasser II, dazu verwenden.

In vielen Stoffaufbereitungsanlagen wird eine Abfolge von Reinigung- und Bearbeitungsvorgängen durchgeführt, wobei man mehrere Bereiche ("Loops") danach definieren kann, wie die anfallenden Filtrate zirkuliert werden: Wenn aus prozesstechnischen Gründen eine Eindickung erfolgt, also Filtrate gebildet werden, werden diese im Wesentlichen innerhalb desselben Bereiches (loops) zurückgeführt und wieder eingespeist. Gemäß dieser Definition zeigt die Fig. 2 eine Zwei-Loop-Anlage. Dabei wird der in Fig. 1 gezeigte Teil so konkretisiert, dass in der Weiterbearbeitung 9 ein zweiter Loop enthalten ist. Dieser umfasst ähnlich wie der erste Loop: Reinigung 5, stromaufwärtige Eindickung 6, unmittelbar folgende stromabwärtige Eindickung 6' und Stoffbearbeitung 7 bei höherer Konsistenz. Prinzipiell gelten hier ähnliche Gesichtspunkte, wie bereits im Zusammenhang mit Fig. 1 erläutert. Insbesondere wird das in der stromabwärtigen Eindickung 6' gebildete Filtrat F6' in die stromaufwärtige Eindickung 6 zurückgeführt. Das kann direkt vor dieser Eindickung 6 erfolgen oder während der Reinigung 5, dann aber nach der Flotation, falls eine solche bei der Reinigung 5 durchgeführt wird.

Auch hier wird in Folge der Eindickung 6 eine relativ hohe Konsistenz (z.B. 15 bis 30 %) aufweisende Faserstoff der Stoffbearbeitung 7 zugeführt, in der unter Anwendung der Hilfsmittel H7 (z.B. Energie und/oder Chemikalien) erneut dispergiert und gebleicht wird. Es kann hier aber auch statt der Dispergierung eine Mahlung vorgenommen werden.

Das in Fig. 2 gezeigte Verfahren ist ein mögliches Ausführungsbeispiel, bei dem der Erfindungsgedanke an beiden Loops realisiert ist. Es muss auch nicht notwendigerweise, an allen Loops angewendet werden. Es kann genügen, die vorgeschlagene Filtratführung lediglich am ersten oder am zweiten Loop vorzunehmen, wobei dann im Allgemeinen der 1. Loop am günstigsten wäre.

In einem in Fig. 3 dargestellten Anlagenschema wird etwas konkreter ein Ausführungsbeispiel des Verfahrens erläutert. Dieses Schema zeigt, dass Papiermaterial P, also der Rohstoff, mit Wasser W in einen Stofflöser 11 eingetragen wird. In bekannter Weise wird der Inhalt des Stofflösers 11 mit Hilfe eines am Boden angeordneten Rotors 12 in eine Umfangsströmung versetzt und dabei zerkleinert, bis der aufgelöste Faserstoff durch das Bodensieb 13 als Faserstoffsuspension S abgepumpt werden kann. Somit führt dieser Stofflöser 11 den Verfahrensschritt Auflösung 1 gemäß Fig. 1 durch. Die Faserstoffsuspension S wird anschließend in einer Reinigung (Reinigung 2 in Fig. 1) von einem großen Teil ihrer Störstoffe befreit, wozu hier Hydrozyklone 14 und Drucksortierer 15 vorgeschlagen werden. Diese beiden Reinigungsstufen können entweder mit der Konsistenz des aus dem Stofflöser 11 abgepumpten Faserstoffes betrieben werden oder auch nach einer weiteren Verdünnung. Wie bei diesem Beispiel gezeigt, wird der Gutstoff des Drucksortierers 15 mit Wasser W oder Trübfiltrat TF3 weiter verdünnt und anschließend in eine Flotationsanlage 16 geführt. In dieser wird in bekannter Weise ein großer Teil der Druckfarben und sonstiger feiner hydrophober Störstoffpartikel mit dem Schaum abgeführt, so dass eine weiter gereinigte Faserstoffsuspension vorliegt. Diese kann - wie hier gezeigt - in Hydrozyklonen 17 noch weiter von Störstoffen, insbesondere Schwerteilen, gereinigt werden. Dabei können die Hydrozyklone 17 in einer mehrstufigen Hydrozyklonanlage betrieben werden. Da solche Hydrozyklone besonders wirksam sind, wenn sie mit einer geringen Stoffdichte betrieben werden, wird bei dem hier gezeigten Beispiel die Konsistenz im Einlauf zu den Hydrozyklonen 17 mit dem Filtrat F3' weiter herabgesetzt. Der Gutstoff der Hydrozyklonanlage gelangt dann zum Zweck der Eindickung 3 in ein Scheibenfilter 18. Es ist auch möglich, die Suspension (nach Verdünnung) zuerst in die Hydrozyklonanlage und dann in die Flotationsanlage 16 zu führen. Das Filtrat F3 (Klarfiltrat) des Scheibenfilters 18 wird zur Auflösung im Stofflöser 11 verwendet. Ein eventuell ebenfalls anfallendes Trübfiltrat TF3 kann vor die Flotationsanlage 16 oder vor die Hydrozyklonanlage geführt werden. Der im Scheibenfilter 18 eingedickte Stoff S' wird unmittelbar danach einer stromabwärtigen Eindickung 3' mit Hilfe einer Schneckenpresse 19 unterzogen. Das dabei anfallende Filtrat F3' wird stromaufwärts des Scheibenfilters 18 in den Stoffkreislauf zurückgeführt, und zwar hier an einer Stelle nach der Flotationsanlage 16 und vor der Hydrozyklonanlage. Die Vorteile, die sich daraus ergeben, sind bereits erläutert worden. Der Mengenstrom (Volumenstrom) des Filtrates F3' kann zeitlichen Schwankungen unterworfen sein, was in der zur Eindickung 3 verwendeten Vorrichtung zu Problemen führen kann, insbesondere wenn es sich dabei um einen Scheibenfilter 18 handelt. Daher ist es oft von Vorteil, den Mengenstrom zeitlich zu vergleichmäßigen, wozu hier ein Pufferbehälter 26 dient.

Der in der Schneckenpresse 19 eingedickte Stoff 20, der z.B. eine Konsistenz zwischen 15 und 30 % haben kann, wird einer Stoffbearbeitung 4 unterzogen, wozu hier ein Disperger 21 gewählt wurde. Bekanntlich wird in solch einem Disperger eine Homogenisierung des Faserstoffs bewirkt und/oder die Dispergierung von Störstoffen und/oder die Ablösung von restlichen Druckfarben von den Fasern. In vielen Fällen wird zusätzlich auch mindestens eine Bleiche durchgeführt. Der dispergierte und eventuell gebleichte Stoff 21 gelangt dann in eine Vorratsbütte 23, wo er mit Wasser 24 verdünnt wird.

Der in Fig. 3 gezeigte Teil der Stoffaufbereitungsanlage kann der erste Loop im Sinne der Fig. 2 sein. Das bedeutet, dass eine weitere Reinigung weitere Eindickungen und Bearbeitungsschritte erfolgen können, die hier nicht dargestellt sind.

## Patentansprüche

1. Verfahren zur Behandlung von einer Papierfasersuspension (S, S'), insbesondere einer aus Altpapier gewonnenen Papierfasersuspension (S, S '),
welches mindestens eine Reinigung (2, 5) zur Entfernung von Störstoffen mit mindestens einer Flotation umfasst,
sowie mindestens zwei Eindickungen (3, 3', 6, 6'), in der Filtrate (F3, F3', TF3, F6, F6', TF6) gebildet werden,
wobei mindestens zwei Eindickungen (3, 3', 6, 6') stromabwärts einer mindestens eine Flotation enthaltende Reinigung (2, 5) durchgeführt werden,
**dadurch gekennzeichnet,**
**dass** das Filtrat (F3', F6') einer stromabwärtigen Eindickung (3', 6') zumindest teilweise nach der Flotation, aber vor einer Eindickung (3, 6) wieder zugegeben wird, die stromaufwärts der Eindickung (3', 6') liegt, aus der das Filtrat (F3', F6') stammt.

2. Verfahren nach Anspruch 1,
**dadurch gekennzeichnet,**
**dass** das Filtrat (F3', F6') einer stromabwärtigen Eindickung (3', 6') vollständig vor einer Eindickung (3, 6) wieder zugegeben wird, die stromaufwärts der Eindickung (3', 6') liegt, aus der das Filtrat (F3', F6') stammt.

3. Verfahren nach Anspruch 1 oder 2,
**dadurch gekennzeichnet,**
**dass** das Filtrat (F3', F6') unmittelbar hinter der Vorrichtung zur Flotation zugegeben wird.

4. Verfahren nach Anspruch 1 oder 2,
**dadurch gekennzeichnet,**
**dass** das Filtrat (F3', F6') unmittelbar vor der oder in die Vorrichtung zur stromaufwärtigen Eindickung (3, 6) zugegeben wird.

5. Verfahren nach einem der voran stehenden Ansprüche,
**dadurch gekennzeichnet,**
**dass** zwei Eindickungen (3, 3', 6, 6') unmittelbar nacheinander durchgeführt werden, wobei der eingedickte Stoff der stromaufwärtigen Eindickung (3, 6) in die stromabwärtige Eindickung (3', 6') geführt wird.

6. Verfahren nach Anspruch 5,
**dadurch gekennzeichnet,**
**dass** die jeweils stromaufwärtige Eindickung (3, 6) in einer Filteranlage durchgeführt wird.

7. Verfahren nach Anspruch 6,
**dadurch gekennzeichnet,**
**dass** in der Filteranlage mindestens ein Scheibenfilter verwendet wird.

8. Verfahren nach Anspruch 6,
**dadurch gekennzeichnet,**
**dass** in der Filteranlage mindestens eine Siebbandpresse oder Siebpresse verwendet wird.

9. Verfahren nach einem der voran stehenden Ansprüche,
**dadurch gekennzeichnet,**
**dass** der Mengenfluss des Filtrates (F3', F6') vor der Zugabe in die Eindickung (3, 6) zeitlich vergleichmäßigt wird.

10. Verfahren nach Anspruch 9,
**dadurch gekennzeichnet,**
**dass** zur Vergleichmäßigung ein Pufferbehälter (26) verwendet wird.

11. Verfahren nach einem der Ansprüche von 5 bis 10,
**dadurch gekennzeichnet,**
**dass** die jeweils stromabwärtige Eindickung (3', 6') in einer Pressenanlage durchgeführt wird.

12. Verfahren nach Anspruch 11,
**dadurch gekennzeichnet,**
**dass** in der Pressenanlage mindestens eine Schneckenpresse verwendet wird.

13. Verfahren nach einem der Ansprüche von 5 bis 10,
**dadurch gekennzeichnet,**
**dass** die jeweils stromabwärtige Eindickung (3, 6) in mindestens einem mit feinen Öffnungen versehenen Drucksortierer durchgeführt wird.

14. Verfahren nach einem der voran stehenden Ansprüche,
**dadurch gekennzeichnet,**
**dass** bei der Reinigung (2, 5) mindestens ein Hydrozyklon (14, 17) zur Fliehkraftabscheidung von Störstoffen verwendet wird.

15. Verfahren nach Anspruch 14,
**dadurch gekennzeichnet,**
**dass** Störstoffe bei der Reinigung (2, 5) nacheinander flotiert und mit Fliehkraft abgeschieden wird und dass die Flotation vor der Fliehkraftabscheidung durchgeführt wird.

16. Verfahren nach Anspruch 14,
**dadurch gekennzeichnet,**
**dass** Störstoffe bei der Reinigung (2, 5) nacheinander flotiert und mit Fliehkraft abgeschieden und
**dass** die Flotation nach der Fliehkraftabscheidung durchgeführt wird.

17. Verfahren nach Anspruch 15 oder 16,
**dadurch gekennzeichnet,**
**dass** das Filtrat (F3', F6') der stromabwärtigen Eindickung (3', 6') zwischen Flotation und Fliehkraftabscheidung zugegeben wird.

18. Verfahren nach Anspruch 15, 16 oder 17,
**dadurch gekennzeichnet,**
**dass** Hydrozyklone (17) bei der Dünnstoff-Reinigung (2, 5) mit einer Zulaufstoffdichte unter 2 %, vorzugsweise unter 1,5 %, verwendet werden.

19. Verfahren nach einem der voran stehenden Ansprüche,
**dadurch gekennzeichnet,**
**dass** bei der Reinigung (2, 5) mindestens ein Drucksortierer (15) verwendet wird.

## Claims

1. Method for treating a paper fibre suspension (S, S'), in particular a paper fibre suspension (S, S') obtained from waste paper,
which method comprises at least one cleaning stage (2, 5) for removing contraries with at least one flotation stage,
and at least two thickening stages (3, 3', 6, 6'), in which filtrates (F3, F3', TF3, F6, F6', TF6) are formed,
at least two thickening stages (3, 3', 6, 6') being carried out downstream of at least one cleaning stage (2, 5) containing a flotation stage,
**characterized in that**
the filtrate (F3', F6') from a downstream thickening stage (3', 6') is at least partly added again after the flotation stage but before a thickening stage (3, 6) which is located upstream of the thickening stage (3', 6') from which the filtrate (F3', F6') originates.

2. Method according to Claim 1,
**characterized in that**
the filtrate (F3', F6') from a downstream thickening stage (3', 6') is added completely again before a thickening stage (3, 6) which is located upstream of the thickening stage (3', 6') from which the filtrate (F3', F6') originates.

3. Method according to Claim 1 or 2,
**characterized in that**
the filtrate (F3', F6') is added immediately after the flotation apparatus.

4. Method according to Claim 1 or 2,
**characterized in that**
the filtrate (F3', F6') is added immediately before or in the upstream thickening apparatus (3, 6).

5. Method according to one of the preceding claims,
**characterized in that**
two thickening stages (3, 3', 6, 6') are carried out immediately after each other, the thickened stock from the upstream thickening stage (3, 6) being led into the downstream thickening stage (3' 6').

6. Method according to Claim 5,
**characterized in that**
the respective upstream thickening stage (3, 6) is carried out in a filter system.

7. Method according to Claim 6,
**characterized in that**
at least one disc filter is used in the filter system.

8. Method according to Claim 6,
**characterized in that**
at least one screen belt press or screen press is used in the filter system.

9. Method according to one of the preceding claims,
**characterized in that**
the flow rate of the filtrate (F3', F6') is smoothed over time before the addition into the thickening stage (3, 6).

10. Method according to Claim 9,
**characterized in that**
a buffer container (26) is used for the smoothing.

11. Method according to one of the Claims from 5 to 10,
**characterized in that**
the respective downstream thickening stage (3', 6') is carried out in a press system.

12. Method according to Claim 11,
**characterized in that**
at least one screw press is used in the press system.

13. Method according to one of the Claims from 5 to 10,
**characterized in that**
the respective downstream thickening stage (3, 6) is carried out in at least one pressure screen provided with fine apertures.

14. Method according to one of the preceding claims,
**characterized in that**
in the cleaning stage (2, 5), at least one hydrocyclone (14, 17) is used for the separation of contraries by centrifugal force.

15. Method according to Claim 14,
**characterized in that**
contraries are flotated one after another during the cleaning stage (2, 5) and are separated out by centrifugal force, and **in that** the flotation stage is carried out before the separation by centrifugal force.

16. Method according to Claim 14,
**characterized in that**
contraries are flotated one after another during the cleaning stage (2, 5) and are separated out by centrifugal force, and **in that** the flotation stage is carried out after the separation by centrifugal force.

17. Method according to Claim 15 or 16,
**characterized in that**
the filtrate (F3', F6') from the downstream thickening stage (3', 6') is added between flotation stage and separation by centrifugal force.

18. Method according to Claim 15, 16 or 17,
**characterized in that**
hydrocyclones (17) are used during the thin stock cleaning (2, 5) with a feed consistency of less than 2%, preferably less than 1.5%.

19. Method according to one of the preceding claims,
**characterized in that**
at least one pressure screen (15) is used during the cleaning (2, 5).

## Revendications

1. Procédé de traitement d'une suspension de fibre de papier (S, S'), en particulier d'une suspension de fibre de papier (S, S') récupérée à partir de vieux papiers, qui comprend au moins un nettoyage (2, 5) pour éliminer les matières étrangères par au moins une flottation, ainsi qu'au moins deux épaississements (3, 3', 6, 6') au cours desquels on forme des filtrats (F3, F3', TF3, F6, F6', TF6), dans lequel on effectue au moins deux épaississements (3, 3', 6, 6') en aval d'au moins un nettoyage (2, 5) comportant une flottation, **caractérisé en ce que** l'on ajoute de nouveau le filtrat (F3', F6') à au moins un épaississement (3', 6') situé en aval au moins en partie après la flottation mais avant un épaississement (3, 6), qui est situé en amont de l'épaississement (3', 6') d'où provient le filtrat (F3', F6').

2. Procédé selon la revendication 1, **caractérisé en ce que** l'on ajoute de nouveau le filtrat (F3', F6') à un épaississement (3', 6') situé en aval entièrement avant un épaississement (3, 6), qui est situé en amont de l'épaississement (3', 6') d'où provient le filtrat (F3', F6').

3. Procédé selon la revendication 1 ou 2, **caractérisé en ce que** l'on ajoute le filtrat (F3', F6') immédiatement après le dispositif de flottation.

4. Procédé selon la revendication 1 ou 2, **caractérisé en ce que** l'on ajoute le filtrat (F3', F6') immédiatement avant ou dans le dispositif d'épaississement (3, 6) situé en amont.

5. Procédé selon l'une quelconque des revendications précédentes, **caractérisé en ce que** l'on effectue deux épaississements (3, 3', 6, 6') immédiatement l'un après l'autre, dans lequel on introduit la matière épaissie de l'épaississement situé en amont (3, 6) dans l'épaississement situé en aval (3', 6').

6. Procédé selon la revendication 5, **caractérisé en ce que** l'on effectue chaque fois l'épaississement situé en amont (3, 6) dans une installation de filtre.

7. Procédé selon la revendication 6, **caractérisé en ce que** l'on utilise au moins un filtre-presse à plateau dans l'installation de filtre.

8. Procédé selon la revendication 6, **caractérisé en ce que** l'on utilise au moins une presse à tamis sans fin ou une presse à tamis dans l'installation de filtre.

9. Procédé selon l'une quelconque des revendications précédentes, **caractérisé en ce que** l'on homogénéise dans le temps le débit du filtrat (F3', F6') avant l'addition dans l'épaississement (3, 6).

10. Procédé selon la revendication 9, **caractérisé en ce que** l'on utilise un réservoir tampon (26) pour l'homogénéisation.

11. Procédé selon l'une quelconque des revendications 5 à 10, **caractérisé en ce que** l'on effectue l'épaississement aval respectif (3', 6') dans une installation de presse.

12. Procédé selon la revendication 11, **caractérisé en ce que** l'on utilise au moins une presse à vis dans l'installation de presse.

13. Procédé selon l'une quelconque des revendications 5 à 10, **caractérisé en ce que** l'on effectue l'épaississement aval respectif (3, 6) dans au moins une trieuse sous pression dotée de fines ouvertures.

14. Procédé selon l'une quelconque des revendications précédentes, **caractérisé en ce que** l'on utilise lors du nettoyage (2, 5) au moins un hydrocyclone (14, 17) pour la séparation centrifuge de matières étrangères.

15. Procédé selon la revendication 14, **caractérisé en ce que** l'on effectue successivement la flottation et la séparation centrifuge des matières étrangères lors du nettoyage (2, 5) et **en ce que** l'on effectue la flottation avant la séparation centrifuge.

16. Procédé selon la revendication 14, **caractérisé en ce que** l'on effectue successivement la flottation et la séparation centrifuge des matières étrangères lors du nettoyage (2, 5) et **en ce que** l'on effectue la flottation après la séparation centrifuge.

17. Procédé selon la revendication 15 ou 16, **caractérisé en ce que** l'on ajoute le filtrat (F3', F6') à l'épaississement situé en aval (3', 6') entre la flottation et la séparation centrifuge.

18. Procédé selon la revendication 15, 16 ou 17, **caractérisé en ce que** l'on utilise des hydrocyclones (17) lors du nettoyage des matières diluées (2, 5) avec une densité de matières d'entrée inférieure à 2 %, de préférence inférieure à 1,5 %.

19. Procédé selon l'une quelconque des revendications précédentes, **caractérisé en ce que** l'on utilise au moins une trieuse sous pression (15) lors du nettoyage (2, 5).
